# FASCICULE DE BREVET EUROPEEN

(11) **EP 2 326 487 B1**
(45) Date de publication et mention de la délivrance du brevet: **20.06.2012**
(21) Numéro de dépôt: 09815687.0
(22) Date de dépôt: 24.09.2009
(51) Int. Cl.: B29C 70/48, C08J 5/04, C08J 5/06, C08J 5/08, D06M 15/59

(54) **ARTICLE POLYAMIDE COMPOSITE**
POLYAMID-VERBUNDARTIKEL
COMPOSITE POLYAMIDE ARTICLE

(30) Priorité: 26.09.2008 FR 0805299
(43) Date de publication de la demande: 01.06.2011
(73) Titulaire: Rhodia Opérations, 93306 Aubervilliers (FR)
(72) Inventeur: ORANGE, Gilles, F-69390 Vourles (FR); DURAND, Roland, F-69720 Saint Bonnet De Mure (FR); GILBAIN, Olivier, F-69780 Mions (FR); MOLLET, Vincent, 71100 Chalon-sur-Saône (FR)
(74) Mandataire: Valentino, Cédric
(86) Numéro de dépôt international: PCT/EP2009/062379
(87) Numéro de publication internationale: WO 2010/034771

(56) Documents cités:
- WO-A-03/014198
- FR-A- 2 856 693

## Description

La présente invention concerne l'utilisation de résines polyamides de faibles masses moléculaires et non évolutives pour la fabrication d'articles composites. Lesdits articles présentent de bonnes propriétés mécaniques, telles que notamment la rigidité, la résistance à la rupture, la résistance aux chocs, et le comportement en fatigue, même lorsqu'ils sont fabriqués avec des temps de cycle plus courts que ceux habituellement utilisés, et sans aucun autre traitement pendant ou après la fabrication des articles composites.

### ART ANTERIEUR

Dans le domaine des matériaux hautes performances, les articles composites ont pris une place prépondérante, de par leurs performances et les gains de poids qu'ils autorisent. Les articles composites hautes performances les plus connus à ce jour, sont obtenus à partir de résines thermodurcissables, dont l'utilisation est limitée aux applications de faibles à moyennes séries, principalement dans l'aéronautique, le sport automobile, et dans les meilleurs cas, présentant des temps de fabrication voisins d'une quinzaine de minutes, comme par exemple, lors de la fabrication de skis. Le coût de ces matériaux, et/ou les temps de fabrication, les rendent difficilement compatibles avec un usage en grande série. De plus, l'utilisation de résines thermodurcissables implique souvent la présence de solvants et de monomères. Enfin, ces composites sont difficilement recyclables.

Une réponse, en regard des temps de fabrication, est donnée par les composites à matrice thermoplastique. Les polymères thermoplastiques sont en général connus pour leur viscosité élevée, ce qui constitue un frein en ce qui concerne l'imprégnation des matériaux de renfort, composés en général de faisceaux multifilamentaires très denses. Il résulte de l'emploi des matrices thermoplastiques disponibles sur le marché, une difficulté d'imprégnation nécessitant soit des temps d'imprégnation prolongés, soit des pressions de mise en oeuvre importantes. Dans la majeure partie des cas, les matériaux composites obtenus à partir de ces matrices peuvent présenter des défauts, notamment sous forme de microvides et de zones non imprégnées. Ces défauts sont à l'origine de chutes de propriétés mécaniques, de vieillissement prématuré du matériau ainsi que de problèmes de délaminage lorsque le matériau se compose de plusieurs couches de renforts. Ce phénomène de perte de propriétés mécaniques est par ailleurs accentué lorsque les temps de cycle pour la fabrication des articles composites diminuent.

Afin de remédier à ces problèmes de difficultés d'imprégnation dus à la viscosité élevée des polymères thermoplastiques à l'état fondu, il a été proposé d'utiliser des monomères ou encore des prépolymères (WO03/014198) ; certains présentant une faible masse moléculaire en poids Mw. La faible viscosité à l'état fondu de ces systèmes permet alors une bonne imprégnation de l'étoffe de renfort. Le pré-polymère infiltré présente cependant une certaine instabilité en raison de sa réactivité dans la mesure où il n'a pas été polymérisé jusqu'à atteindre son équilibre thermodynamique. Par ailleurs, dans le but d'accroitre les performances mécaniques souhaitées il est nécessaire d'augmenter la masse moléculaire du prépolymère, notamment en procédant à des cycles de fabrication de l'article composite plus long ou à passer par une étape de traitement spécifique en post-fabrication. Pour ce faire, il est parfois nécessaire d'utiliser des conditions de procédé particulières dues à la présence de catalyseurs et le contrôle des effluents. Selon les systèmes, il peut également être nécessaire d'éliminer les monomères résiduels, parfois en forte teneur, qui n'auraient pas totalement réagi lors de cette étape.

L'objectif de la présente invention est donc de remédier à ces inconvénients en proposant un article composite qui puisse être fabriqué avec des temps de cycle courts, sans aucun traitement ou post-traitement particulier, ne présentant pas de monomères résiduels, tout en ayant de bonnes propriétés d'usage telles que des propriétés mécaniques élevées.

### INVENTION

La demanderesse a découvert de manière inattendue que l'utilisation de polyamides sous forme de résines de faibles masses moléculaires et non évolutives pour la fabrication d'articles composites permettaient l'obtention d'articles présentant de bonnes propriétés mécaniques, telles que notamment la rigidité, la résistance à la rupture, la résistance aux chocs, et le comportement en fatigue, même lorsqu'ils sont fabriqués avec des temps de cycle plus courts que ceux habituellement utilisés, et sans aucun autre traitement pendant ou après la fabrication des articles composites. Ceci permet de fournir un matériau composite présentant un avantage de réduction de coûts de fabrication, par l'emploi d'un outillage mettant en oeuvre des temps de cycles raccourcis. Par ailleurs, les résines polyamides selon l'invention sont simples à fabriquer, notamment par polymérisation jusqu'à atteindre l'équilibre thermodynamique.

Il a été observé que les masses moléculaires des résines polyamide considérées n'évoluent pas lors du procédé de fabrication des pièces composites. Ainsi, des composites avec de hautes performances mécaniques sont obtenus de manière tout à fait surprenante alors que la matrice polymérique ne présente en elle-même pas de performances mécaniques élevées en raison de sa trop faible masse moléculaire.

Les résines polyamide non évolutives de faible masse moléculaire peuvent être obtenues de différentes façons, notamment par déséquilibre des compositions et/ou ajout de composants bloquants lors du procédé de polymérisation ou polycondensation des polyamides ; ou encore par ajout de composés en mélange, notamment en extrusion.

Ces résines sont dites non évolutives dans la mesure où on n'observe pas d'augmentation significative de poids moléculaire, ou de degré de polymérisation, lorsque celles-ci sont mises en oeuvre dans le procédé de fabrication d'article composite ; c'est-à-dire dans des conditions de températures et de pressions favorisant normalement une augmentation du poids moléculaire. Ces résines sont en ce sens différents des polymères partiellement polymérisés ou pré-polymères classiquement utilisées.

Ainsi, quelles que soient les conditions de mises en oeuvre de la résine selon l'invention lors de la fabrication des articles composites, notamment les temps de cycle, les températures et pressions et les gammes usuelles de teneur en eau, lesdits articles présentent de bonnes propriétés mécaniques stables, contrôlées et reproductibles.

Les articles selon l'invention présentent notamment les avantages de rigidité, résistance, légèreté, et recyclabilité, et un bon aspect de surface.

L'invention a pour premier objet un procédé de fabrication d'un article composite par moulage comprenant au moins les étapes suivantes :
a) une étape d'imprégnation d'au moins une étoffe de renfort avec une composition comprenant une résine polyamide à l'état fondu, ladite résine présente une masse moléculaire en poids Mw comprise entre 5000 et 25000 g/mol et une concentration en groupements terminaux amines (GTA) ou en groupements terminaux carboxyliques (GTC) inférieure ou égale à 20 meq/kg ; et
b) une étape de refroidissement et ensuite de récupération de l'article composite.

La présente invention concerne également l'utilisation d'une composition comprenant une résine polyamide à l'état fondu, ladite résine présentant une masse moléculaire en poids Mw comprise entre 5000 et 25000 g/mol et une concentration en groupements terminaux amines (GTA) ou en groupements terminaux carboxyliques (GTC) inférieure ou égale à 20 meq/kg ; pour la fabrication d'un article composite, notamment comprenant au moins une étoffe de renfort.

On entend notamment par article composite selon l'invention un matériau comprenant une ossature appelée renfort qui assure la tenue mécanique et d'une matrice thermoplastique qui assure la cohésion de la structure et la retransmission des efforts vers le renfort.

On entend par étoffe, une surface textile obtenue par assemblage de fils ou de fibres solidarisés par un procédé quelconque, tel que notamment collage, feutrage, tressage, tissage, tricotage. Ces étoffes sont aussi désignées comme des réseaux fibreux ou filamenteux. Par fil, on entend un monofilament, un fil multifilamentaire continu, un filé de fibres, obtenu à partir d'un unique type de fibres ou de plusieurs types de fibres en mélange intime. Le fil continu peut être également obtenu par assemblage de plusieurs fils multifilamentaires. Par fibre, on entend un filament ou un ensemble de filaments coupés, craqués ou convertis.

L'étoffe de renfort comprend préférentiellement des fils et/ou fibres de renfort choisis parmi les fils et/ou les fibres de carbone, de verre, d'aramides, de polyimides, de lin, de chanvre, de sisal, de coir, de jute, de kenaf et/ou de leur mélange. Plus préférentiellement, les étoffes de renfort sont uniquement constituées de fils et/ou fibres de renfort choisis parmi les fils et/ou les fibres de carbone, de verre, d'aramides, de polyimides, de lin, de chanvre, de sisal, de coir, de jute, de kenaf et/ou de leur mélange.

Ces étoffes on préférentiellement un grammage, c'est-à-dire le poids au mètre carré, compris entre 100 et 1000 g/m².

Leur structure peut être aléatoire (mat), unidirectionelle (UD), ou multidirectionnelle plus ou moins équilibrée (2D, 2,5D, 3D ou autre).

Les polyamides peuvent être choisis dans le groupe comprenant les polyamides obtenus par polycondensation d'au moins un diacide carboxylique aliphatique linéaire avec une diamine aliphatique ou cyclique ou entre au moins un diacide carboxylique aromatique et une diamine aliphatique ou aromatique, les polyamides obtenus par polycondensation d'au moins un aminoacide ou lactame sur lui-même, ou leur mélange et (co)polyamides. Les polyamides semi-cristallins sont particulièrement préférés. Les polyamides linéaires sont également préférés.

Le polyamide de l'invention est notamment choisi dans le groupe comprenant les polyamides obtenus par polycondensation d'au moins un diacide carboxylique aliphatique avec une diamine aliphatique ou cyclique comme le PA 6.6, PA 6.10, PA 6.12, PA 12.12, PA 4.6, MXD 6 ou entre au moins un diacide carboxylique aromatique et une diamine aliphatique ou aromatique comme les polytéréphtalamides, polyisophtalamides, polyaramides, ou leur mélange et (co)polyamides. Le polyamide de l'invention peut aussi être choisi dans les polyamides obtenus par polycondensation d'au moins un aminoacide ou lactame sur lui-même, l'amino-acide pouvant être généré par l'ouverture hydrolytique d'un cycle lactame tels que, par exemple PA 6, PA 7, PA 11, PA 12, ou leur mélange et (co)polyamides.

La polymérisation du polyamide de l'invention est notamment réalisée selon les conditions opératoires classiques de polymérisation des polyamides, de manière continue ou discontinue.

Les résines polyamides selon l'invention présentent une concentration en groupements terminaux amines (GTA) ou en groupements terminaux carboxyliques (GTC) inférieure ou égale à 20 meq/kg, préférentiellement inférieure ou égale à 15 meq/kg, plus préférentiellement inférieure ou égale à 10 meq/kg, encore plus préférentiellement inférieure ou égale 5 meq/kg, tout particulièrement égale à 0 meq/kg.

Un polyamide convenable pour la présente invention peut ainsi présenter par exemple un GTA de 0 meq/kg et un GTC de 500 meq/kg. Un polyamide convenable pour la présente invention peut ainsi présenter par exemple un GTA de 400 meq/kg et un GTC de 0 meq/kg. Un polyamide présentant une concentration en groupements terminaux amines (GTA) inférieure ou égale à 5 meq/kg, présente généralement une concentration en groupements terminaux carboxyliques (GTC) comprise entre 100 et 1000 meq/kg. Un polyamide présentant une concentration en groupements terminaux carboxyliques (GTC) inférieure ou égale à 5 meq/kg, présente généralement une concentration en groupements terminaux amines (GTA) comprise entre 100 et 1000 meq/kg.

Les quantités de groupements terminaux amines (GTA) et/ou acides (GTC) peuvent être déterminées par dosage potentiométrique après complète dissolution du polyamide, par exemple dans le trifluoroéthanol, et ajout d'une base forte en excès. Les espèces basiques sont alors titrées par une solution aqueuse d'acide fort.

De telles résines selon l'invention peuvent être fabriquées de nombreuses manières et sont bien connues en soit de l'homme de l'art.

On peut par exemple fabriquer de telles résines par ajout en polymérisation, notamment au début en cours ou en fin de la polymérisation, des monomères du polyamide, en présence en outre de composés difonctionnels et/ou monofonctionnels. Ces composés difonctionnels et/ou monofonctionnels présentent des fonctions amines ou acides carboxyliques capables de réagir avec les monomères du polyamide et sont utilisés dans des proportions telles que la résine polyamide résultante présente un GTA ou GTC inférieur à 20 meq/Kg.

Pour obtenir des résines selon l'invention en polymérisation, on peut notamment utiliser la relation DPn = (1+r)/(1+r-2pr) dans laquelle DPn est le degré de polymérisation de la résine, r est le rapport GTA/GTC ou GTC/GTA, inférieur à 1, introduits lors de la polymérisation et p correspond à l'avancement de la réaction.

Il est également possible de mélanger à un polyamide des composés difonctionnels et/ou monofonctionnels, notamment par extrusion, généralement une extrusion réactive, de façon à obtenir la résine polyamide utilisée selon la présente invention.

On peut utiliser tout type d'acides mono- ou di-carboxylique, aliphatiques ou aromatiques ou tous types d'amines mono- ou di-amines, aliphatiques ou aromatiques. On peut notamment utiliser comme composé monofonctionnel la n-dodécylamine et la 4-amino-2,2,6,6-tétraméthylpipéridine, l'acide acétique, l'acide laurique, la benzylamine, l'acide benzoïque et l'acide propionique . On peut notamment utiliser comme composé difonctionnel, l'acide adipique, l'acide téréphtalique, l'acide isophtalique, l'acide sébacique, l'acide azélaïque, l'acide dodécanedioïque, l'acide décanedioïque, l'acide pimélique, l'acide subérique, les dimères d'acides gras, la di(ß-éthylcarboxy) cyclohexanone, l'hexaméthylène diamine, la méthyl-5 pentaméthylène diamine, la métaxylylène diamine, la butanediamine, l'isophorone diamine, le 1,4 diamino cyclohexane, la 3,3',5-triméthyl hexaméthylènediamine.

On peut également utiliser un excès d'acide adipique ou un excès d'hexaméthylène diamine pour la production d'un polyamide de type 66 présentant une fluidité en fondu élevée et une concentration en groupements terminaux amines (GTA) ou en groupements terminaux carboxyliques (GTC) inférieure à 20 meq/kg.

Il est également possible de fortement diminuer les concentrations en groupements terminaux acides ou amines d'un polyamide en opérant une finition sous vide en fin de polymérisation de manière à éliminer l'eau afin de consommer tout ou pratiquement tous les groupements terminaux ; et ainsi garantir que la résine n'évoluera plus dans le sens de l'augmentation de la masse molaire quelles que soient les conditions de mise en oeuvre du composite, notamment sous pression ou sous vide.

La masse moléculaire en poids Mw des résines polyamides est comprise entre 5000 et 25000 g/mol, préférentiellement comprise entre 10000 et 15000 g/mol. Cette masse n'évolue pratiquement pas lors du procédé de fabrication des articles composites du à l'absence, ou quasi absence, de groupement terminaux acide ou amine. La masse moléculaire en poids peut être mesurée par analyse par chromatographie d'exclusion stérique SEC ou GPC du polyamide dans le dichlorométhane après hydrolyse des fonctions amides par l'anhydride trifluoracétique. Les distributions en masses absolues sont obtenues par détection viscosimétrique.

Le polyamide selon l'invention sous forme de résine non évolutive présente avantageusement une viscosité fondue η inférieure ou égale à 40 Pa.s, préférentiellement inférieure ou égale à 20 Pa.s. Cette viscosité peut être mesurée à l'aide d'un rhéomètre plan-plan de diamètre 50 mm, sous un balayage en cisaillement par palier allant de 1 à 160 s-1. Le polymère est sous forme de granulés, ou bien de film d'une épaisseur 150 µm. Le polymère est amené à une température de 25 à 30°C au dessus de son point de fusion, et la mesure est alors effectuée.

L'étape d'imprégnation de la résine polyamide et de l'étoffe de renfort peut être réalisée de diverses manières, selon divers procédés possibles. Il est parfaitement possible de procéder à l'imprégnation d'une ou plusieurs étoffe(s) de renfort.

L'imprégnation de l'étoffe de renfort par la composition polyamide peut notamment être réalisée par mise en présence de la composition polyamide à l'état fondu, notamment par injection, avec l'étoffe de renfort ; cette étoffe pouvant être située dans un moule. L'imprégnation peut aussi être réalisée par mise en présence de l'étoffe de renfort avec la composition polyamide sous forme de poudre ou de film, puis mise en fusion de ladite composition polyamide.

On peut par exemple injecter la résine polyamide en fondu dans une chambre de moulage comprenant au moins une ou plusieurs étoffes de renfort. L'intérieur de la chambre de moulage peut être à une température de plus ou moins 50°C par rapport à la température de fusion dudit polyamide. Après imprégnation, on peut procéder ensuite au refroidissement de la chambre de moulage et de l'article obtenu, pour enfin récupérer ledit article. Ce procédé est connu également sous le nom de procédé de moulage par transfert de résine (RTM) en procédé thermodure, qui consiste à injecter de la résine dans un moule fermé dans lequel ont été préalablement placées des fibres de renforcement. Ce procédé peut être réalisé sous pression.

On peut également réaliser un article composite selon l'invention par un procédé de mise en contact d'une ou plusieurs étoffes de renfort avec de la poudre d'une résine polyamide telle que définie précédemment, notamment de la poudre fine obtenue par broyage, et l'on réalise ladite imprégnation par fusion du polyamide, à une température égale ou supérieure à celle du point de fusion du polyamide, éventuellement sous pression.

L'article composite selon l'invention peut aussi être réalisé par compression en température d'un empilement d'étoffes de renfort et de films de résine polyamide : procédé de « film stacking ». On procède alors à la mise en contact d'une ou plusieurs étoffes de renfort et un ou plusieurs films de résine polyamide de haute fluidité et imprégnation des étoffes par fusion du polyamide. Les pressions nécessaires pour un bon assemblage, sont généralement supérieures à quelques bars.

Après l'imprégnation de l'étoffe de renfort par la résine polyamide, l'article est obtenu par solidification de la matrice. Le refroidissement peut avantageusement être effectué rapidement de façon à éviter une cristallisation trop importante du polyamide, notamment pour maintenir les propriétés de l'article. Le refroidissement peut notamment être effectué en moins de 5 minutes, plus préférentiellement en moins d'une minute. Le moule peut par exemple être refroidit par un circuit de fluide froid. On peut aussi éventuellement transférer l'article composite dans un moule froid, éventuellement sous pression.

La composition polyamide et/ou l'article composite selon l'invention peuvent également comprendre tous les additifs habituellement utilisés dans les compositions à base de polyamide utilisées pour la fabrication d'articles. Ainsi, on peut citer à titre d'exemple d'additifs les stabilisants thermiques, stabilisants UV, antioxydants, lubrifiants, les pigments, colorants, plastifiants, charges de renfort, et agents modifiant la résistance aux chocs. Ces additifs peuvent être incorporés lors de la synthèse de la résine ou bien en ajout aux poudres ou films ou à la fusion lors de l'infiltration.

Des additifs pour améliorer la qualité des interfaces étoffes de renfort polyamide peuvent également être utilisés. Ces additifs peuvent être par exemple incorporés à la composition polyamide, incorporés dans les fils et/ou fibres de l'étoffe de renfort, présents sur les fils et/ou fibres de ladite étoffe, ou encore déposés sur l'étoffe de renfort. Ces additifs peuvent être des agents de couplage tels que ceux de type aminosilanes ou chlorosilanes (notamment dans le cas d'étoffe en verre), ou encore des agents fluidifiants ou mouillants, ou leur association.

Des charges renforçantes peuvent être incorporées à la composition polyamide. Ces charges peuvent être choisies parmi les charges fibreuses, tels que des fibres de verre courtes par exemple, ou des charges non fibreuses tels que le kaolin, le talc, la silice, le mica ou la wollastonite. Leur taille est généralement comprise entre 1 et 50 µm. Des charges sub-microniques voire nanométriques peuvent également être utilisées, seules ou en complément des autres charges.

La présente invention concerne aussi un article susceptible d'être obtenu par le procédé de l'invention.

Les articles selon l'invention comprennent préférentiellement entre 25 et 70 % en volume d'étoffe de renfort par rapport au volume total de l'article.

Les articles de l'invention peuvent être des articles finis, ou encore semi-finis, pouvant être appelé pré-imprégnés. La présence de résine non évolutive peut être particulièrement intéressante dans ce cas dans la mesure où la bonne fluidité utilisée lors de la fabrication des articles semi-finis est en effet conservée lors de la mise en forme finale pour la réalisation des articles finis. On peut par exemple procéder au thermoformage des articles composites sous forme de plaques pour leur donner une forme définie après refroidissement. L'invention concerne ainsi des articles composites ou préformes susceptibles d'être obtenus par le procédé selon la présente invention.

Les articles de l'invention peuvent aussi être des structures de type sandwich présentant une âme généralement de faible densité insérée entre deux couches externes (peaux). Les composites de l'invention peuvent être utilisés pour former les couches externes, en les associant à une âme type nid d'abeille ou type mousse. Les couches peuvent être assemblées par collage chimique ou thermique, ou encore tout autre procédé.

Les structures composites selon l'invention peuvent être employées dans de nombreux domaines tels que l'aéronautique, l'automobile et plus généralement les transports, l'industrie électrique, l'industrie des sports et loisirs. Ces structures peuvent être utilisées pour réaliser des articles de sports tels que des skis ou bien pour réaliser des surfaces diverses telles que des planchers spéciaux, des cloisons, des carrosseries de véhicules, ou des panneaux publicitaires. Dans l'aéronautique ces structures sont utilisées notamment au niveau des carénages (fuselage, aile, empennage). Dans l'automobile, elles sont utilisées par exemple au niveau des planchers ou des supports tels que les tablettes arrières.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

Différentes résines polyamides ont été utilisées dans cette partie expérimentale et sont mentionnées au Tableau 1.
- PA C1 (comparatif) : polyamide 6 linéaire standard ayant un indice de viscosité IV de 115 (ISO 307 dans l'acide formique) et une Mw de 33000 g/mol.
- PA C2 (comparatif) : polyamide 6.6 linéaire standard ayant un indice de viscosité IV de 130 et une Mw de 33000 g/mol.
- PA C3 (comparatif) : polyamide 6.6 ayant un IV initial de 59, une Mw de 15500 g/mol et une teneur GTA égale à 130 meq/kg et une teneur GTC égale à 160 meq/kg.
- PA 1 : polyamide 6.6 obtenu par ajout en polymérisation d'acide adipique ayant un IV de 40, une Mw de 11000 g/mol, une teneur GTA égale à 0 meq/kg et une teneur GTC égale à 445 meq/kg.
- PA 2 : polyamide 6.6 obtenu par ajout en polymérisation d'acide adipique ayant un IV de 47, une Mw de 12700 g/mol, une teneur GTA égale à 0 meq/kg et une teneur GTC égale à 354 meq/kg.

Les polyamides PA 1 et PA 2 sont synthétisés selon un procédé standard de synthèse de polyamide 66 suivi d'une étape de finition sous vide durant 10min. Le produit fondu est ensuite extrudé par la vanne de coulée et recueilli sur une plaque métallique sur laquelle il cristallise. Les polyamides cristallisés sont broyés pour finalement obtenir une poudre prête à l'emploi.

Les renforts utilisés dans les exemples sont sous forme de préformes en tissus de verre, coupés aux dimensions requises pour la fabrication de plaques c'est-à-dire 150 x 150 mm. L'étoffe de renfort utilisée est un tissu en fibre de verre (0°-90°) d'origine Synteen & Luckenhaus issu d'un roving de 1200 tex, présentant un grammage de 600 g/m².

### Exemple 1 : Préparation des articles composites

La réalisation des pièces composites est faite au moyen d'une presse hydraulique à double plateaux contrôlés en température Schwabenthan (Polystat 300A) : plateaux chauffants (résistances chauffantes), et plateaux refroidis (circulation d'eau). Un moule métallique dotée d'une empreinte de dimensions 150 mm x 150 mm est utilisé.

Pour réaliser un composite contenant 80% poids de fibres de verre avec le tissus de grammage 600 g/m², on introduit dans le moule une préforme constituée d'un empilement alterné comprenant au total 6 feuilles de tissus de verre. De la poudre polyamide est située entre chaque feuille de tissus.

La température des plateaux de la presse est préalablement montée à 290°C avant l'introduction de la préforme. A cette température, la pression est appliquée et maintenue à une valeur nominale ; des dégazages sont rapidement effectués. Le moule est alors transféré sur le dispositif plateaux refroidis et maintenu sous pression. Différents types de cycle ont été utilisés : haute et moyenne pression, temps court et long.

Deux types de cycles ont été réalisés : un cycle 5 min sous 70 bars (Cycle 1), et un cycle de 5 min sous 15,5 bars (Cycle 2). Ces temps correspondent à la durée totale du cycle entre la mise en température du moule et le refroidissement sous pression.

### Exemple 2 : Caractérisation des articles composites

Les plaques 150x150 mm sont découpées afin d'obtenir des échantillons de dimensions 150x20x2 mm. Un traitement de conditionnement est alors réalisé selon la norme ISO1110 "plastique/polyamide/conditionnement accéléré d'éprouvettes". La teneur en eau à l'équilibre est obtenue par conditionnement des pièces composites avec un cycle de 11 jours, à 70°C sous une humidité résiduelle RH de 62%.

Les propriétés mécaniques ont été obtenues à 23°C, et humidité RH = 50% (stabilisation des éprouvettes 48h à 23°C, RH = 50).

Les essais de flexion 3 points à température ambiante sont réalisés sur des éprouvettes parrallépipédiques (150x20x2 mm), selon la norme ISO N° 14125, sur une machine ZWICK 1478 : entre-axe de 64 mm, vitesse de traverse de 5 mm/min. Les valeurs de module élastique E de Young (GPa) et de contrainte σ max au pic (MPa) sont mesurées et calculées.

Les résines polyamides ont été caractérisées par des mesures d'indice de viscosité (IV) et de masse moléculaire en GPC : Mn, Mw, et Mz. Les mesures de masse moléculaires ont été faites avant et après réalisation des objets composites.

Les résultats sont exprimés au Tableau 1 suivant :

**Tableau 1**

| **POLYAMIDE** | | | | **COMPOSITE** | | | | |
|---|---|---|---|---|---|---|---|---|
| | | | | **CYCLE 1** | | | **CYCLE 2** | |
| **Polyamide utilisé** | **Mw (g/mol)** | **GTA (meq/kg)** | **GTC (meq/kg)** | **Mw** | **Module élastique E (GPa)** | **Contrainte σ max (MPa)** | **Module élastique E (GPa)** | **Contrainte σmax (MPa)** |
| **C1** | 33000 | nm | nm | 33000 | 25 | 550 | 15 | 200 |
| **C2** | 33000 | nm | nm | 33000 | 27 | 600 | 24 | 450 |
| **C3** | 15500 | 130 | 160 | 21000 | 26,5 | 595 | 26,5 | 585 |
| **1** | 11000 | 0 | 445 | 10100 | 27 | 500 | nm | nm |
| **2** | 12700 | 0 | 354 | 11900 | 27 | 600 | 27 | 500 |

| | | | | | | | | |
|---|---|---|---|---|---|---|---|---|
| nm=non mesuré | | | | | | | | |

On observe ainsi l'obtention d'articles composites ayant de bonnes propriétés mécaniques en utilisant les polyamides selon l'invention, particulièrement en procédant à des cycles de fabrication peu contraignant comme le cycle 2, en comparaison avec des polyamides classiques de l'art antérieur (C1 et C2). Par ailleurs les polyamides de l'invention présentent un très bon aspect de surface et une facilité d'usage incomparable, dû à leur faible viscosité en fondu, en comparaison avec les polyamides C1 et C2.

Au surplus, on observe que les articles selon l'invention présentent un excellent compromis de propriétés mécaniques et de fluidité en fondu en comparaison avec des articles obtenus par mise en oeuvre des prépolymères évolutifs (C3).

Par ailleurs, il apparait que le prépolymère C3 présente une instabilité due à sa réactivité dans la mesure où il n'a pas été polymérisé jusqu'à atteindre son équilibre thermodynamique. Il est également difficile à produire pour la même raison. Il apparait également au cours des essais qu'en fonction des conditions de mises en oeuvre de l'article composite utilisant le prépolymère C3 les propriétés mécaniques de celui-ci peuvent varier largement due à cette instabilité.

## Revendications

1. Procédé de fabrication d'un article composite par moulage comprenant au moins les étapes suivantes :
a) une étape d'imprégnation d'au moins une étoffe de renfort avec une composition comprenant une résine polyamide à l'état fondu, ladite résine présente une masse moléculaire en poids Mw comprise entre 5000 et 25000 g/mol et une concentration en groupements terminaux amines (GTA) ou en groupements terminaux carboxyliques (GTC) inférieure ou égale à 20 meq/kg ; et
b) une étape de refroidissement et ensuite de récupération de l'article composite.

2. Procédé selon la revendication 1, **caractérisé en ce que** le polyamide est choisi dans le groupe constitué par : les polyamides obtenus par polycondensation d'au moins un diacide carboxylique aliphatique linéaire avec une diamine aliphatique ou cyclique ou entre au moins un diacide carboxylique aromatique et une diamine aliphatique ou aromatique, les polyamides obtenus par polycondensation d'au moins un aminoacide ou lactame sur lui-même, ou leur mélange et (co)polyamides.

3. Procédé selon la revendication 1 ou 2, **caractérisé en ce que** la résine polyamide présente une masse moléculaire en poids Mw comprise entre 10000 et 15000 g/mol.

4. Procédé selon l'une quelconque des revendications 1 à 3, **caractérisé en ce que** la résine polyamide présente une concentration en groupements terminaux amines (GTA) ou en groupements terminaux carboxyliques (GTC) inférieure ou égale à 10 meq/kg, préférentiellement inférieure ou égale à 5 meq/kg.

5. Procédé selon l'une quelconque des revendications 1 à 4, **caractérisé en ce que** l'imprégnation de l'étoffe de renfort par la composition polyamide est réalisée par mise en présence de la composition polyamide à l'état fondu et de l'étoffe de renfort.

6. Procédé selon l'une quelconque des revendications 1 à 4, **caractérisé en ce que** l'imprégnation de l'étoffe de renfort par la composition polyamide est réalisée par mise en présence de l'étoffe de renfort avec la composition polyamide sous forme de poudre ou de film, puis mise en fusion de ladite composition polyamide.

7. Procédé selon l'une quelconque des revendications 1 à 6, **caractérisé en ce que** l'article comprend entre 25 et 70 % en volume d'étoffe de renfort par rapport au volume total de l'article.

8. Procédé selon l'une quelconque des revendications 1 à 7, **caractérisé en ce que** l'étoffe de renfort comprend des fils et/ou fibres de renfort choisis parmi les fils et/ou les fibres de carbone, de verre, d'aramides, de polyimides, de lin, de chanvre, de sisal, de coir, de jute, de kenaf et/ou de leur mélange.

9. Article susceptible d'être obtenu par le procédé selon l'une quelconque des revendications 1 à 8.

10. Utilisation d'une composition comprenant une résine polyamide à l'état fondu, ladite résine présentant une masse moléculaire en poids Mw comprise entre 5000 et 25000 g/mol et une concentration en groupements terminaux amines (GTA) ou en groupements terminaux carboxyliques (GTC) inférieure ou égale à 20 meq/kg ; pour la fabrication d'un article composite comprenant au moins une étoffe de renfort.

## Claims

1. Process for the manufacture of a composite article by molding, comprising at least the following steps:
a) a step of impregnating at least one reinforcing cloth with a composition comprising a polyamide resin in the molten state, said resin having a weight-average molecular weight Mw of between 5000 and 25 000 g/mol and a concentration of amine terminal groups (ATG) or of carboxylic terminal groups (CTG) of less than or equal to 20 meq/kg; and
b) a step of cooling and then recovering the composite article.

2. Process according to Claim 1, **characterized in that** the polyamide is selected from the group consisting of: polyamides obtained by polycondensation of at least one linear aliphatic dicarboxylic acid with an aliphatic or cyclic diamine, or between at least one aromatic dicarboxylic acid and an aliphatic or aromatic diamine, polyamides obtained by polycondensation of at least one amino acid or lactam with itself, or blends and (co)polyamides thereof.

3. Process according to Claim 1 or 2, **characterized in that** the polyamide resin has a weight-average molecular weight Mw of between 10 000 and 15 000 g/mol.

4. Process according to any one of Claims 1 to 3, **characterized in that** the polyamide resin has a concentration of amine terminal groups (ATG) or of carboxylic terminal groups (CTG) of less than or equal to 10 meq/kg, preferably less than or equal to 5 meq/kg.

5. Process according to any one of Claims 1 to 4, **characterized in that** the impregnation of the reinforcing cloth with the polyamide composition is carried out by bringing the polyamide composition in the molten state into contact with the reinforcing cloth.

6. Process according to any one of Claims 1 to 4, **characterized in that** the impregnation of the reinforcing cloth with the polyamide composition is carried out by bringing the reinforcing cloth into contact with the polyamide composition in the form of a powder or of a film and then melting said polyamide composition.

7. Process according to any one of Claims 1 to 6, **characterized in that** the article comprises between 25% and 70% by volume of reinforcing cloth, relative to the total volume of the article.

8. Process according to any one of Claims 1 to 7, **characterized in that** the reinforcing cloth comprises reinforcing yarns and/or fibers selected from yarns and/or fibers of carbon, glass, aramids, polyimides, flax, hemp, sisal, coir, jute, kenaf and/or mixtures thereof.

9. Article that can be obtained by means of the process according to any one of Claims 1 to 8.

10. Use of a composition comprising a polyamide resin in the molten state, said resin having a weight-average molecular weight Mw of between 5000 and 25 000 g/mol and a concentration of amine terminal groups (ATG) or of carboxylic terminal groups (CTG) of less than or equal to 20 meq/kg, for the manufacture of a composite article comprising at least one reinforcing cloth.

## Patentansprüche

1. Verfahren zur Herstellung eines Verbundgegenstands durch Abformen mit den folgenden Schritten:
a) einem Schritt des Imprägnierens mindestens eines zur Verstärkung dienenden textilen Flächengebildes mit einer ein Polyamidharz umfassenden Zusammensetzung in schmelzflüssigem Zustand, wobei das Harz eine gewichtsmittlere Molmasse Mw zwischen 5000 und 25.000 g/mol und eine Konzentration von Aminendgruppen (AEG) oder Carboxylendgruppen (CEG) kleiner gleich 20 meq/kg aufweist; und
b) einem Schritt des Abkühlens und nachfolgenden Gewinnens des Verbundgegenstands.

2. Verfahren nach Anspruch 1, **dadurch gekennzeichnet, dass** das Polyamid aus der Gruppe bestehend aus durch Polykondensation mindestens einer linearen aliphatischen Dicarbonsäure mit einem aliphatischen oder cyclischen Diamin oder zwischen mindestens einer aromatischen Dicarbonsäure und einem aliphatischen oder aromatischen Diamin erhaltenen Polyamiden, durch Polykondensation mindestens einer Aminosäure oder mindestens eines Lactams mit sich selbst erhaltenen Polyamiden oder Mischungen und (Co)polyamiden davon ausgewählt wird.

3. Verfahren nach Anspruch 1 oder 2, **dadurch gekennzeichnet, dass** das Polyamidharz eine gewichtsmittlere Molmasse Mw zwischen 10.000 und 15.000 g/mol aufweist.

4. Verfahren nach einem der Ansprüche 1 bis 3, **dadurch gekennzeichnet, dass** das Polyamidharz eine Konzentration von Aminendgruppen (AEG) oder Carboxylendgruppen (CEG) kleiner gleich 10 meq/kg und vorzugsweise kleiner gleich 5 meq/kg aufweist.

5. Verfahren nach einem der Ansprüche 1 bis 4, **dadurch gekennzeichnet, dass** die Imprägnierung des zur Verstärkung dienenden textilen Flächengebildes mit der Polyamidzusammensetzung durch Inberührungbringen der Polyamidzusammensetzung in schmelzflüssigem Zustand und des zur Verstärkung dienenden textilen Flächengebildes durchgeführt wird.

6. Verfahren nach einem der Ansprüche 1 bis 4, **dadurch gekennzeichnet, dass** die Imprägnierung des zur Verstärkung dienenden textilen Flächengebildes mit der Polyamidzusammenstzung durch Inberührungbringen des zur Verstärkung dienenden textilen Flächengebildes mit der Polyamidzusammensetzung in Pulver- oder Folienform und anschließendes Schmelzen der Polyamidzusammensetzung durchgeführt wird.

7. Verfahren nach einem der Ansprüche 1 bis 6, **dadurch gekennzeichnet, dass** der Gegenstand zwischen 25 und 70 Vol.-% zur Verstärkung dienendes textiles Flächengebilde, bezogen auf das Gesamtvolumen des Gegenstands, umfasst.

8. Verfahren nach einem der Ansprüche 1 bis 7, **dadurch gekennzeichnet, dass** das zur Verstärkung dienende textile Flächengebilde Verstärkungsfäden und -fasern, die unter Fäden und/oder Fasern aus Kohlenstoff, Glas, Aramiden, Polyimiden, Leinen, Hanf, Sisal, Kokosbastabfall, Jute, Kenaf und/oder Mischungen davon ausgewählt sind, umfasst.

9. Gegenstand, der nach dem Verfahren nach einem der Ansprüche 1 bis 8 erhältlich ist.

10. Verwendung einer ein Polyamidharz umfassenden Zusammensetzung in schmelzflüssigem Zustand, wobei das Harz eine gewichtsmittlere Molmasse Mw zwischen 5000 und 25.000 g/mol und eine Konzentration von Aminendgruppen (AEG) oder Carboxylendgruppen (CEG) kleiner gleich 20 meq/kg aufweist, zur Herstellung eines Verbundgegenstands, der mindestens ein zur Verstärkung dienendes textiles Flächengebilde umfasst.
